# EUROPEAN PATENT APPLICATION

(11) **EP 4 422 033 A1**
(43) Date of publication of application: **28.08.2024**
(21) Application number: 23158714.8
(22) Date of filing: 27.02.2023
(51) Int. Cl.: H02J 50/10, H02J 50/80

(54) **WIRELESS POWER TRANSFER**

(71) Applicant: Koninklijke Philips N.V., 5656 AG Eindhoven (NL)
(72) Inventor: NEERHOF, Gijs, Eindhoven (NL); LEBENS, Pascal Leonard Maria Theodoor, Eindhoven (NL); LULOFS, Klaas Jakob, 5656AG Eindhoven (NL); STEUNEBRINK, Tim Patrick, Eindhoven (NL); DRAAK, Johannes Wilhelmus, Eindhoven (NL)
(74) Representative: Philips Intellectual Property & Standards

(57) **Abstract**

A power transmitter (101) wirelessly provides power to a power receiver (105) via a power transfer signal generated by a power transfer coil (103). The power receiver (105) comprises a receiver coil (107) extracting power from the power transfer signal during a power transfer phase and a communicator (307, 309) which communicates with the power transmitter (101) The power transmitter (101) transmits a message to the power receiver (105) comprising a frequency indication indicative of a frequency of an envelope of the power transfer signal. A controller (307) then adapts a power transfer operation in response to the frequency indication. For example, a timing parameter for communication, foreign object detection testing, or measurements may be adapted to reflect the envelope frequency. In some cases, the operation of the load may be adapted depending on the envelope frequency.

## Description

### FIELD OF THE INVENTION

The invention relates to operation of a wireless power transfer from a power transmitter to a power receiver, and in particular, but not exclusively, to wirelessly transfer power to a high power device, such as a kitchen appliance.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply where power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.5KW.

In many systems, such as specifically Qi systems, communication from the power receiver to the power transmitter may use load modulation where a load of the power transfer signal is varied in dependence on the data to be transmitted. However, such load modulation may be difficult to detect if the power transfer loading of the power transfer signal varies at the same time. Similarly, communication from the power transmitter to the power receiver may be achieved by modulating the power transfer signal (e.g. amplitude or frequency modulation) but interference to such modulation may be caused by variations in the parameters of the power transfer signal due to e.g. a varying load.

In some systems it has accordingly been proposed to use a completely separate communication approach. Specifically, Ki wireless power transfer systems may establish a two way communication link using the Near Field Communication, NFC, standard. The communication is during the power transfer phase performed in short time intervals in order to avoid or reduce interference between the power transfer and the communication. The power receiver is arranged to detect the NFC carrier to perform the communication during the short time intervals.

During power transfer operation, the power receiver extracts power for a load from the power transfer signal. In many cases, the extraction of power is also used to power e.g. functionality of the power receiver itself, such as processing units, user interfaces etc. However, such an approach requires additional functionality and may not be optimal in all scenarios.

It is desired for power transfer devices to be used in many different conditions, operating scenarios, and geographical reasons. However, conventional power transfer devices tend to not be optimal in all scenarios and may provide suboptimal performance in some conditions.

Hence, an improved approach for a wireless power transfer system would be advantageous, in particular, an approach allowing increased flexibility, reduced cost, reduced complexity, improved communication, additional functionality, improved adaptation to different operational scenarios, improved operation in different geographical regions and in different operational contexts, and/or improved performance would be advantageous.

### SUMMARY OF THE INVENTION

Accordingly, the Invention seeks to preferably mitigate, alleviate or eliminate one or more of the above mentioned disadvantages singly or in any combination.
According to an aspect of the invention, there is provided a power receiver for wirelessly receiving power from a power transmitter via an electromagnetic power transfer signal, the power receiver comprising: an input circuit comprising a receiver coil arranged to extract power from the power transfer signal during a power transfer phase; a communicator arranged to communicate with the power transmitter, the communicator being arranged to receive a message from the power transmitter, the message comprising a frequency indication being indicative of a frequency of an envelope of the power transfer signal; a controller arranged to adapt a power transfer operation in response to the frequency indication.
The invention may allow improved performance and/or operation and/or implementation in many embodiments. It may allow an overall improved power transfer operation in many systems and embodiments.

The approach may in many embodiments provide an improved operation and may in many applications allow improved adaptation of the power receiver (including the load) to the particular operating conditions. It may in some cases prevent malfunction or even potentially destructive operation. In many cases, it may result in improved operation. In many applications, the approach may allow the power receiver to provide indications to other functionality or to a user reflecting a property of the operation that can be performed, for example it may indicate if only reduced performance can be achieved.

The Inventors have realized that envelope variations of the power transfer signal may occur and that the frequency of these may vary in different scenarios and/or geographical reasons. For example, the envelope variations may result from varying power supply signals/ voltages and these may be different in different regions as the power net/ infrastructure/ mains use different frequencies in different regions. The Inventors have further realized that frequency variations in such envelope variations may affect performance (and could even lead to failure or damage being caused). They have further realized that improved performance may be achieved by adapting power transmitters and power receivers to communicate frequency indications and with the power receiver adapting the power transfer operation in response to such frequency indications.

The approach may in many embodiments reduce sensitivity to, or impact of, different frequencies of the envelope of the power transfer signal, e.g. due to the power transmitter being supplied by AC supply signals with different frequencies.

In particular, the approach may in many scenarios provide improved performance and adaptation to situations where the power transfer signal generated by the power transmitter is dependent on a supply voltage that may have varying frequencies. For example, it may allow improved performance for systems where power transmitters may potentially be supplied by a 50Hz source or a 60Hz source.

The power transfer drive signal/ power transfer signal may be generated to have a periodically time varying envelope and the frequency indication may be indicative of a time period/ frequency of the periodic variations. The periodic variations may be substantially sinewave (or rectified sinewave) shaped (e.g. for at least part of the cycle). Such a sinewave signal may be interrupted by non-power transfer time intervals around minimal zero-crossings of the signal. The frequency indication may be indicative of a frequency/ time period between such non-power transfer time intervals.

The power transfer signal may employ a repeating time frame comprising power transfer intervals in which the power transfer signal is generated and non-power transfer time intervals in which no power transfer signal is generated. The power transfer time intervals may comprise at least 50%, 60%, 70%, 80%, or 90% of the repeating time frame. The repeating time frame may be synchronized with the envelope variations and the frequency indication may be indicative of a (repetition) frequency of the repeating time frame.

The non-power transfer time intervals may be used for communication between the power transmitter and power receiver (possibly in either or indeed both directions).

The envelope of an oscillating signal may be a smooth curve outlining its extremes, and the envelope of the power transmitter drive signal/ power transfer signal/ induced signal may be the smooth curve outlining the extremes of the variations occurring at the power transfer signal frequency/ the switch frequency. The power transfer signal frequency may typically be in excess of 1 kHz. The frequency of the envelope of the power transfer signal may typically be less than 200Hz.

In accordance with an optional feature of the invention, the communicator is arranged to receive the frequency indication during a power transfer initiation phase prior to the power transfer phase.

This may allow particularly advantageous operation and adaptation in many embodiments. It may typically allow an improved power transfer operation and/or user experience. In many scenarios, it may allow the power receiver to adapt to the specific envelope frequency prior to the power transfer phase beginning, e.g. by setting an operational parameter or mode for the power transfer in advance of this starting. It may ensure improved operation and e.g. prevent starting the power transfer phase with unacceptable performance.

In many embodiments, the communicator is arranged to receive the frequency indication prior to the power transfer phase.

In accordance with an optional feature of the invention, the controller is arranged to terminate power transfer initiation in response to the frequency indication meeting a criterion.

This may allow particularly advantageous operation and adaptation in many embodiments. It may typically allow an improved power transfer operation and/or user experience. The criterion may for example consider whether the frequency indication indicates an envelope frequency that is acceptable and otherwise the power transfer initiation may be terminated. The criterion may specifically consist in a requirement that the frequency indication indicates an envelope frequency which is not part of a set or range of acceptable frequencies. The set may in some embodiments comprise only a single frequency. For example, if the frequency indication is a single bit indication of a 50Hz or 60Hz envelope frequency and the power receiver is only able to work with a 50Hz envelope frequency, the criterion may consist in a requirement that the frequency indication is indicative of a 60Hz envelope frequency.

In accordance with an optional feature of the invention, the power receiver further comprises a user interface and the controller is arranged to control the user interface to generate a user alert.

This may allow particularly advantageous operation and adaptation in many embodiments. It may typically allow an improved power transfer operation and/or user experience. It may for example allow the user to be informed of a change in the operational parameters or operation that can be expected.

In accordance with an optional feature of the invention, the controller is arranged to adapt a timing property of a power transfer operation in response to the frequency indication.
This may allow particularly advantageous operation and adaptation in many embodiments. It may typically allow an improved power transfer operation and/or user experience. The power receiver may be arranged to synchronize one or more operations to the specific envelope frequency thereby providing improved performance.

In accordance with an optional feature of the invention, the controller is arranged to set an initial timing property for the power transfer phase in response to the frequency indication.

This may allow particularly advantageous operation and adaptation in many embodiments. The approach may provide improved initial performance when entering the power transfer phase. For example, a timing loop controlling operations, such as communication or foreign object detection, may be initialized with a timing frequency corresponding to the envelope frequency indicated by the frequency indication and then be allowed to adapt within a narrow bandwidth around the indicated envelope frequency.

In accordance with an optional feature of the invention, the power transfer operation is a communication operation.

This may allow particularly advantageous operation and adaptation in many embodiments. It may typically allow an improved power transfer operation and/or user experience. Improved and more reliable communication between the power receiver and the power transmitter may typically be achieved by adapting the communication to the envelope frequency.

In many embodiments, the controller may be arranged to adapt a timing of the communication, such as a timing of a transmission of a message to the power transmitter, in response to the frequency indication.

In accordance with an optional feature of the invention, the controller is arranged to adapt at least one of a start, a duration, and a repetition interval for a measurement operation.

This may allow particularly advantageous operation and adaptation in many embodiments. The approach may in many scenarios allow improved adaptation of measurement operations leading to improved measurements and thus typically to improved operation.

In accordance with an optional feature of the invention, the frequency indication is a one bit indication.

This may allow particularly advantageous operation and adaptation in many embodiments, and may in particular allow an improved operation while maintaining a very small communication overhead.

According to an aspect of the invention there is provided a power transmitter for wirelessly providing power to a power receiver via an inductive power transfer signal, the power transmitter comprising: a power transfer coil arranged to generate the power transfer signal; a power transfer driver arranged to generate a power transfer drive signal for the power transfer coil to generate the power transfer signal during a power transfer phase; a communicator arranged to communicate with the power receiver; a controller arranged to control the communicator to transmit a message to the power receiver comprising a frequency indication being indicative of a frequency of an envelope of the power transfer signal during the power transfer phase.

In accordance with an optional feature of the invention, the power transmitter further comprises a power supply input for receiving AC supply power and the frequency indication is indicative of a frequency of the AC supply power.

This may allow particularly advantageous operation and adaptation in many embodiments. It may typically allow an improved power transfer operation and/or user experience. The AC supply power may specifically be a supply power from a power net/ mains powering the power transmitter.

In accordance with an optional feature of the invention, the controller is arranged to measure a frequency of the AC supply power and to determine the frequency indication in response to the measured frequency of the AC supply power.

This may allow particularly advantageous operation and adaptation in many embodiments, and may in particular provide a more flexible power transmitter that can dynamically adapt to different operating scenarios. It may typically allow an improved power transfer operation and/or user experience.

According to an aspect of the invention there is provided a method of operation for a power receiver wirelessly receiving power from a power transmitter via an electromagnetic power transfer signal, the method comprising: an input circuit comprising a receiver coil extracting power from the power transfer signal during a power transfer phase; communicating with the power transmitter to receive a message from the power transmitter comprising a frequency indication being indicative of a frequency of an envelope the power transfer signal; and adapting a power transfer operation in response to the frequency indication.

According to an aspect of the invention there is provided a method of operation for a power transmitter wirelessly providing power to a power receiver via an inductive power transfer signal, the method comprising: generating a power transfer drive signal for a power transfer coil to generate the power transfer signal during a power transfer phase; communicating with the power receiver to transmit a message to the power receiver, the message comprising a frequency indication being indicative of a frequency of an envelope of the power transfer signal during the power transfer phase.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of elements of a power receiver in accordance with some embodiments of the invention;
FIG. 4 illustrates an example of a time frame for a wireless power transfer system in accordance with some embodiments of the invention;
FIG. 5 illustrates an example of a half bridge inverter for a power transmitter;
FIG. 6 illustrates an example of a full bridge inverter for a power transmitter;
FIG. 7 illustrates an example of an envelope variation of a power transfer signal for a wireless power transfer operation.

### DETAILED DESCRIPTION OF THE EMBODIMENTS

The following description focuses on embodiments of the invention applicable to a wireless power transfer system utilizing a power transfer approach such as known from the Ki specification. However, it will be appreciated that the invention is not limited to this application but may be applied to many other wireless power transfer systems.

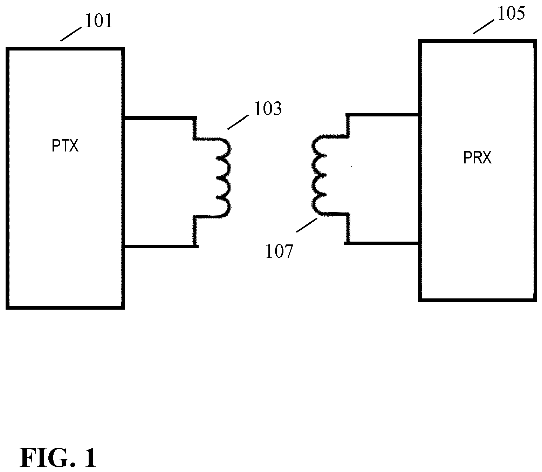

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may correspond to the electromagnetic power transfer component representing the energy transfer from the power transmitter to the power receiver, and may be considered to correspond to the component of the generated electromagnetic field that transfers power from the power transmitter to the power receiver. For example, if there is no loading of the receive coil 107, no power will be extracted by the power receiver from the generated electromagnetic field (apart from losses). In such a scenario, the driving of the transmitter coil 103 may generate an electromagnetic field of potentially high field strength but the power level of the power transfer signal will be zero (apart from losses). In some situations, where a foreign object is present, the power transfer signal may be considered to include a component corresponding to the power transfer to the foreign object, and thus the power transfer signal may be considered to correspond to the power being extracted from the electromagnetic field generated by the power transmitter.

The power transfer signal may typically have a frequency between around 20 kHz to around 500 kHz, and for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element. The power receiver may accordingly provide a load to the power transfer signal by comprising an inductive power extraction element which specifically may be a power extraction coil or an electrical (e.g. heating) element in which current is induced by the power transfer signal.

The system is arranged to transfer substantial power levels, and specifically the power transmitter may support power levels in excess of 50W, 100W, 500W, or 1 kW. For example, for Ki type applications, the power transfers may often be in excess of 100 W, and may be up to more than 2500W for very high power applications.

In the following, the operation of the power transmitter 101 and the power receiver 105 will be described with specific reference to an embodiment generally in accordance with the Specifications (except for the herein described (or consequential) modifications and enhancements) being developed by the Wireless Power Consortium. In particular, the power transmitter 101 and the power receiver 105 may follow, or substantially be compatible with, elements of the Ki Standards.

Many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

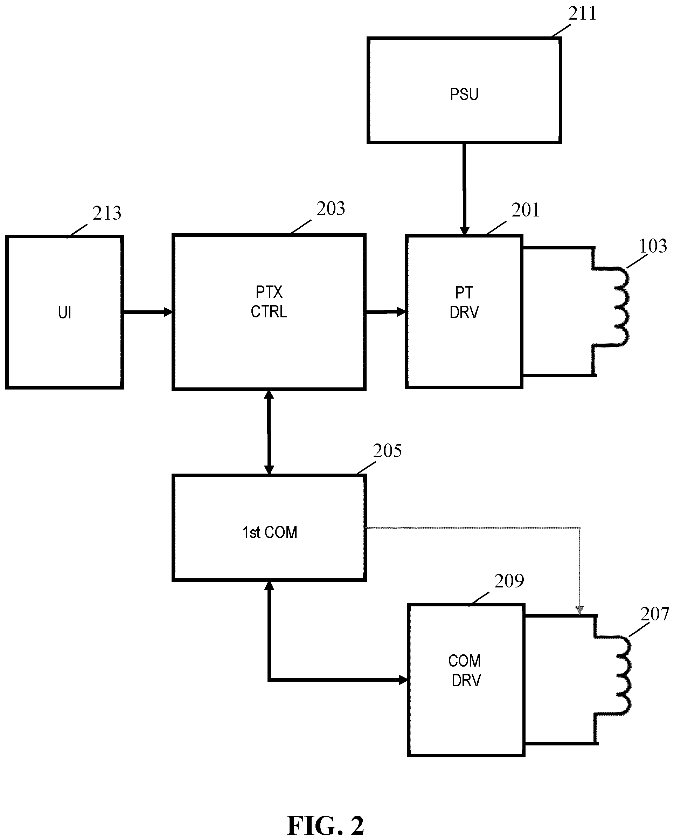

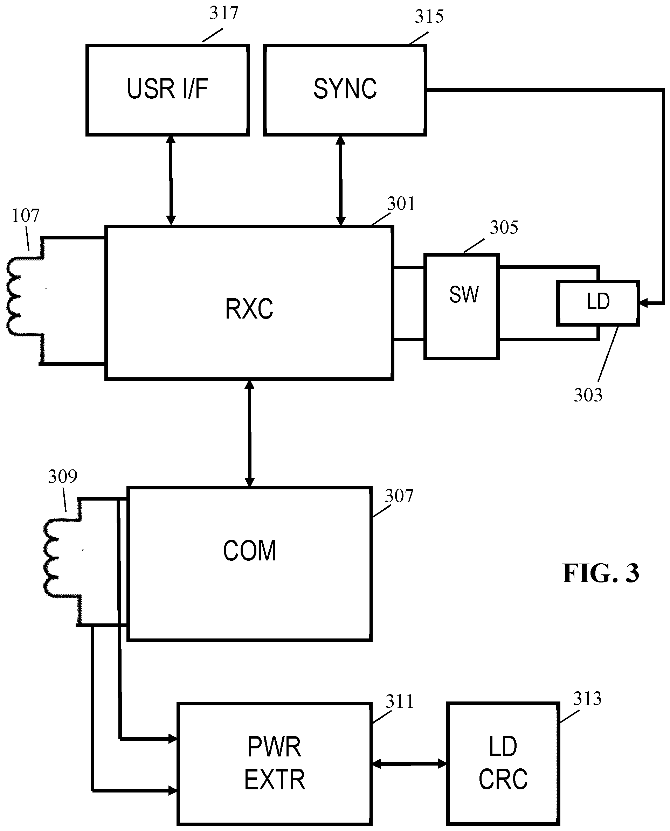

FIG. 2 illustrates elements of the power transmitter 101 and FIG. 3 illustrates elements of the power receiver 105 of FIG. 1 in more detail.

The power transmitter 101 includes a driver 201 which can generate a drive signal that is fed to the transmitter coil 103 which in return generates the electromagnetic power transfer signal, which provides a power transfer to the power receiver 105. The power transfer signal is provided (at least) during power transfer time intervals of the power transfer phase.

The driver 201 may typically comprise an output circuit in the form of an inverter, typically formed by driving a full or half bridge as will be well known to the skilled person.

The power transmitter 101 further comprises a power transmitter controller 203 which is arranged to control the operation of the power transmitter 101 in accordance with the desired operating principles. Specifically, the power transmitter 101 may include many of the functionalities required to perform power control in accordance with the Qi or Ki Specifications.

The power transmitter controller 203 is in particular arranged to control the generation of the drive signal by the driver 201, and it can specifically control the power level of the drive signal, and accordingly the level of the generated power transfer signal. The power transmitter controller 203 comprises a power loop controller controlling a power level of the power transfer signal in response to the power control messages received from the power receiver 105 during the power control phase.

In order to receive data and messages from the power receiver 105, the power transmitter 101 comprises a first communicator 205 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier signal that is generated by a first communication coil 207. The power transmitter specifically comprises a communication driver 209 which is coupled to the first communication coil 207. The communication driver 209 is arranged to generate a communication drive signal which is fed to the first communication coil 207 to generate the communication carrier signal. The communication driver 209 may typically be arranged to generate the communication drive signal/communication carrier signal to have a substantially different frequency than the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz. Specifically for an NFC implementation, the communication carrier signal frequency may be 13.56 MHz.

The first communicator 205 is coupled to the communication driver 209 and is arranged to control this to modulate the communication drive signal/ communication carrier signal in order to transmit data to the power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

In some embodiments, the first communicator 205 may for example receive data to be transmitted to the power receiver from the power transmitter controller 203 and in response generate a control modulation signal that is fed to the communication driver 209. The control modulation signal may for example be a binary signal that matches the data to be transmitted and the communication driver 209 may be arranged to generate the communication drive signal to have corresponding amplitude variations.

For communication from the power receiver to the power transmitter, the modulation of the communication drive signal may be a load modulation. The power receiver may be arranged to modulate the power transfer signal by varying a loading of the power transfer signal generated by the transmitter coil 103 in accordance with the data to be transmitted. The first communicator 205 may be arranged to sense variations in the voltage and/or current of the transmitter coil 103 and to demodulate the load modulation based on these.

In many embodiments, the communication may be in accordance with the Near Field Communication, NFC, Specifications and the power receiver may specifically include NFC functionality. In many embodiments, the first communicator 205, communication driver 209, and first communication coil 207 may implement (at least) the functionality of an NFC reader. Thus, in many embodiments, the communication drive signal/ communication carrier signal is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

In the system of FIGs. 1-3, the communication is during the power transfer phase performed in communication time intervals. Specifically, the transmitter controller 203 may comprise/ implement a synchronizer which is arranged to synchronize the first communicator 205 such that the communication operation (typically both receiving and transmitting data) is performed in (and typically only in) the communication time intervals of the power transfer phase, i.e. in the time intervals that are assigned for communication.

This may substantially improve communication performance and in particular may reduce interference from the power transfer signal to the communication signal.

The approach may in some embodiments utilize a time division approach during the power transfer phase wherein operations, such as foreign object detection and communication, and the main power transfer may e.g. be performed in different time intervals thereby allowing the interference between these (specifically the impact of the power transfer on the foreign object detection/ communication) to be reduced substantially.

Specifically, for the wireless power transfer system, the power transfer signal may be subject to a repeating time frame which comprises at least one power transfer time interval and one communication time interval.

The power transmitter may be arranged to switch off the power transfer signal during the communication time interval and the power receiver may in some embodiments be arranged to disconnect the load during the reduced power time interval.

The power transmitter (and typically the power receiver) may then arrange for one or more operations (functions, processes, procedures) to be performed during the communication time interval, i.e. it may synchronize the execution of one or more operations of the power transmitter to occur during the communication interval. For example, it may typically synchronize the performance of the foreign object detection and communication to occur during the communication time interval. In this way, it can be achieved that the impact of the power transfer and the power transfer signal on the given operation, specifically the foreign object detection and the communication, can be reduced and often minimized.

FIG. 3 illustrates some exemplary elements of the power receiver 105.

The receiver coil 107 is coupled to a power receiver controller 301 which couples the receiver coil 107 to a load 303 via a switch 305 (i.e. it is a switchable load 305). The power receiver controller 301 includes a power control path which converts the power extracted by the receiver coil 107 into a suitable supply for the load 303. In addition, the power receiver controller 301 may include various power receiver controller functionality required to perform power transfer, and in particular functions required to perform power transfer in accordance with the Qi or Ki Specifications. It will be appreciated that the load (and switch) may be considered as part of the power receiver (or may in some applications be considered to be external to the power receiver).

In order to support communication from the power receiver 105 to the power transmitter 101, the power receiver 105 comprises a second communicator 307 and a second communication coil 309. The second communication coil 309 is arranged to couple to the first communication coil 207 and thus the communication carrier signal induces a current (at least an emf) in the second communication coil 309.

The second communicator 307 is coupled to the second communication coil 309 and is arranged to determine amplitude variations in the induced signal and to demodulate amplitude modulations of the communication carrier signal. Thus, the second communicator 307 is arranged to decode data transmitted from the power transmitter by amplitude modulation of the communication carrier signal. It will be appreciated that in other embodiments, the second communicator 307 may be arranged to decode data modulated onto the communication carrier signal using other modulation formats such as frequency or phase modulation.

The second communicator 307 is further arranged to load modulate the communication carrier signal in order to transmit data from the power receiver to the power transmitter. Specifically, the second communicator 307 may comprise a load (such as a capacitor) which depending on the data to transmit can be switched between being coupled to the second communication coil 309 and not being coupled to the second communication coil 309. These load modulations may then be detected by the first communicator 205 of the power transmitter.

In the specific example, the second communication coil 309 and the second communicator 307 may provide NFC compatible communication operation. Specifically, the second communication coil 309 may be arranged to provide functionality corresponding to an NFC tag and to decode data that has been ASK modulated onto the communication carrier signal in accordance with the NFC specifications.

Thus, the second communicator 307 is arranged to transmit data to the power transmitter by varying the loading of the second communication coil 309 in response to data to be transmitted to the power transmitter 101. The load variations are then detected and demodulated by the power transmitter 101 as will be known to the person skilled in the art.

In the example, the second communicator 307 is furthermore arranged to demodulate amplitude, frequency, and/or phase modulation of the communication carrier signal in order to retrieve data transmitted from the power transmitter.

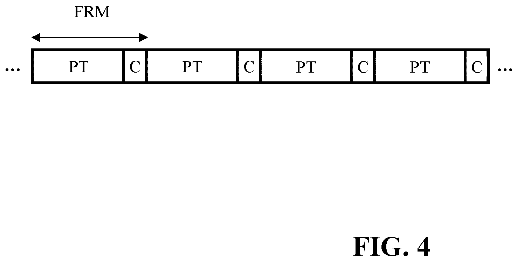

As mentioned, in the specific example, the system applies a repeating time frame during the power transfer phase where the time frame comprises at least one power transfer time interval and at least one communication time interval. An example of such a repeating time frame is illustrated in FIG. 4 where power transfer time intervals are indicated by PT and communication time intervals are indicated by C. In the example, each time frame FRM comprises only one communication time interval and one power transfer time interval. However, it will be appreciated that in other embodiments, other time intervals may also be included in a time frame or a plurality of communication time intervals and/or power transfer time intervals may be included in each time frame.

The power transfer driver 201 is controlled by the power transmitter controller 205 to only generate a drive signal during the power transfer time intervals and not during the communication time intervals. Thus, the driver generates the drive signal and thus the power transfer signal during the power transfer time intervals, whereas the drive signal and thus the power transfer signal is switched off during the communication time intervals.

In the power transfer phase, the power transmitter is thus arranged to perform power transfer during the power transfer time interval of the time frames of the power transfer phase. Specifically, during these time intervals, the power transmitter and the power receiver may operate a power control loop (the power control loop may be based on communication within communication time intervals corresponding to repeating time intervals). Thus, the level of the power being transferred may be dynamically varied.

In the communication time intervals of the time frames of the power transfer phase, the power drive signal is however switched off and thus no power transfer signal is generated during the communication time intervals.

The communication carrier signal may in addition to the communication also provide for an auxiliary power provision from the power transmitter to the power receiver. The auxiliary power transfer/ path may provide a low power supply that may be used to supply internal circuitry such as a user interface or power receiver control functionality. This may in particular be suitable for providing reduced power to the power receiver outside of the power transfer phase.

The communication carrier signal may accordingly be used to provide a second low level power transfer path from the power transmitter to the power receiver. To support this, the power receiver comprises a power extractor 311 which is arranged to extract power from the communication carrier signal. In the specific example, the power extractor 311 may accordingly extract power from the NFC carrier signal. The power extractor 311 is coupled to a load circuit 313 which may be provided by power extracted from the communication carrier signal by the power extractor 311. The load circuit 313 may typically be a control logic/ support function/ circuit of the power receiver, and/or may include a user interface of the power receiver. The load circuit 313 may for example include or consist in elements of the power receiver controller 201 and/or second communicator 307.

Thus, power may be provided from the power transmitter to the power receiver via communication carrier signal/ NFC carrier power harvesting. This may provide power to low power level, and e.g. low voltage, electronics, such as the NFC hardware or a user interface. For example, for an NFC implementation, the extracted power may be up to around 200 mW.

The approach may thus for many practical applications allow a substantially reduced complexity and cost. For example, a power receiving device that includes a heating element as a load may directly be supplied by a power transfer signal directly inducting currents in the heating element. Indeed, in such an example, the described approach may in many cases allow a control and support circuitry as well as a user interface to be implemented and fully powered from the communication carrier signal, and specifically from an NFC carrier. Thus, the approach can in some cases allow a power receiving device to be designed that includes no electronic circuit powered by the power transfer signal. Thus, complex high voltage power extraction circuitry can be avoided completely. It may also be highly suitable for powering the power receiver outside of the power transfer phase, such as when the power transfer is initialized.

In many embodiments, the wireless power transfer system and power transmitter may be arranged to operate in different phases/ modes.

In many embodiments, the wireless power transfer system, and thus the power transmitter and/or power receiver, may be arranged to operate in different phases and in particular it may operate in a power transfer phase in which the power transfer signal is generated, and thus in which the power transfer operation providing power to the load 303 is performed. In the power transfer phase, the power transmitter generates a power transfer drive signal and accordingly a power transfer signal. In the power transfer phase, power is provided/ transferred to the power receiver by the power transfer signal. As described previously, the power transfer signal may use a repeating time frame where the power transfer signal is provided in power transfer time intervals and with the repeating time frame also comprising communication time intervals and/or foreign object detection time intervals. During the power transfer phase, the communication carrier signal may also be generated when communication is performed during the communication time intervals.

In the power transfer phase, the power transmitter may accordingly operate in a power transfer mode in which the power transfer signal is generated by the power transfer driver generating the drive signal. In some embodiments, the power transfer signal/ drive signal may be generated continuously during the power transfer phase but in other scenarios it may be more intermittent and e.g. interrupted by communication or foreign object detection intervals. However, typically, the power transfer signal is generated for at least 70%, 80%, 90%, or 95% of the time when in the power transfer phase.

In addition, the wireless power transfer system may be arranged to operate in a standby phase in which the power transfer signal is not generated by the power transmitter, and thus where no power transfer signal is present. In the standby phase, the power transmitter operates in a standby mode in which the power transfer driver 201 does not generate a power transfer drive signal and thus no drive signal is provided to the transmitter coil 103. In the standby mode/ phase, no power transfer signal is generated by the transmitter coil 103. In the standby phase/ mode, the power transmitter and system seek to minimize the power consumption.

For example, the system may operate in the standby phase/ mode in which no power receiver is detected to be present by the power transmitter. During this scenario, no power transfer signal is generated, and no communication carrier signal is generated. The power transmitter monitors for the presence of a power receiver. In particular, the power transmitter may at regular intervals generate an electromagnetic detection signal and if a load of this signal is detected, the power transmitter may consider that a power receiver is potentially present. The electromagnetic detection signal may be the communication carrier signal. When a power receiver is detected, the power transmitter may transition to a configuration phase.

In the configuration phase, configuration information/ data may be exchanged between the power transmitter and the power receiver. The configuration information/ data may provide information of properties of the power receiver and power transmitter to the complementary device. Each device may adapt an operational parameter based on the exchanged configuration data. Thus, the configuration phase may be used by the power transmitter and the power receiver to exchange specific information on the characteristics of the specific devices thereby allowing them to adapt the operation to the specific pairing of power transmitter and power receiver.

If the configuration phase is not successful, such as e.g. if the power transmitter does not receive suitable messages from the power receiver or an explicit termination is received, the power transmitter may return to the standby phase.

If the configuration and communication conclude successfully, the power transmitter proceeds to a connected phase. In the connected phase, the power transmitter and power receiver have established a communication and the devices may be adapted to each other. However, power transfer has not been initialized. During the connected phase, the communication carrier signal is generated, and it may specifically be continuously present during the connected phase. However, during the connected phase, no power transfer signal is generated. Further, during the connected phase, foreign object detection may be performed. Further, communication may be performed between the power transmitter and the power receiver. The power receiver may in many cases be arranged to extract power from the communication carrier signal (e.g. to power the internal functionality of the power receiver) during the connected phase.

The connected phase may in many scenarios be continued for a substantial time, including for hours or longer. For example, if a kitchen device, e.g. a blender, comprising a wireless power receiver as described is positioned on a worktop comprising a power transmitter as described, they may go through the configuration phase and thus enter the connected phase in an adapted and connected mode. The devices may then remain in this condition for a long time corresponding to the device, e.g. the blender, remaining on the worktop ready for being activated but not actually being switched on.

In response to a detection of a suitable event, the power transmitter and power receiver may transition from the connected phase to the power transfer phase. The event may typically be detected by the power receiver which may transmit a message to the power transmitter to request that the power transfer phase is entered. For example, if the user performs a suitable user action, such as pressing an on button, the power receiver may in response proceed to transmit a request to the power transmitter to request that the power transfer phase is entered.

The power transmitter (and the power receiver) may then proceed to transition to the power transfer.

Upon termination of the power transfer, the power transmitter and the power receiver may return to the idle phase or the connected phase depending on the specific cause of the termination (e.g. if the device is switched off, the power transmitter may return to the connected phase and if it is removed the power transmitter may return to the idle phase).

The configuration and the connected phases may together be referred to as initialization phases.

The connected phase and the standby phase are common in that no power transfer signal/ power drive signal is generated and thus are typically pre-power transfer phases. However, they are different in that the communication carrier is generated for a larger proportion of time when in the connected phase than during the standby phase. Indeed, in the connected phase the communication carrier signal may in many embodiments be generated continuously during the connected phase, or at least for no less than 50%, 60%, 70%, 80%, 90%, or 95% of the time in different embodiments. In contrast, during the standby phase, the communication carrier signal may be generated for no more than 1%, 2%, 5%, or 10% in different embodiments. Thus, the communication carrier signal is generated for a much higher proportion of time (at least 5, 10, 20 times more in different embodiments). These approaches allow the standby phase to have much smaller power consumption than the connected phase but allows the connected phase to allow lower latency and possibly higher data rate communication. It also allows higher auxiliary power provision and thus allows the power receiver to employ increased functionality.

The power transmitter is in many situations powered from an AC (Alternating Current) source, and specifically is often powered from a mains power supply, i.e. from the power net infrastructure of the locality in which the power transmitter is used. The power transmitter may accordingly comprise a power supply input 211 which receives an AC supply power (e.g. with an alternating voltage and current). In many embodiments, the input supply power may be a 110V, 220V, or 240V mains AC voltage.

The power supply input 211 may provide power to the entire power transmitter functionality and may typically include functionality for generating a lower voltage and power regulated DC supply voltage for powering the electronic functionality of the power transmitter. For example, the power supply input 211 may generate a voltage stabilized DC supply (e.g. of 3.3V, 5V, 9V, or 12V) that may be used to power various electronic and processing functionality.

The power supply input 211 is further arranged to provide a supply power to the driver 201 and specifically to the inverter output. However, rather than providing a fixed regulated DC voltage, the supply to the output of the driver is often an AC or rectified AC voltage that follows the variations in the input supply signal.

The driver 201 generates the current and voltage which is fed to the output resonance circuit and thus to the transmitter coil 103. The driver 201 is typically a drive circuit in the form of an inverter which generates an alternating signal with a relatively high frequency (above 10 kHz in most cases) from a supply voltage. The higher switch frequency facilitates power transfer to the power receiver.

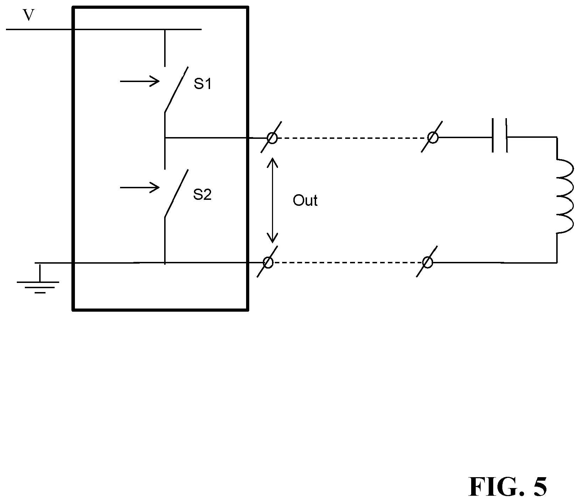

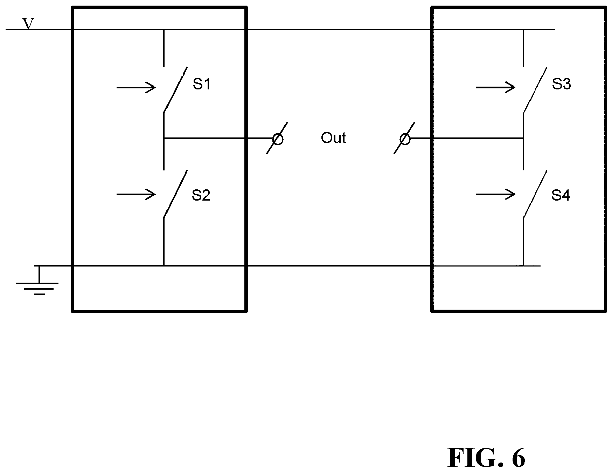

The output of the driver 201 is typically a switch bridge generating the drive signal by the appropriate switching of switches of the switch bridge. FIG. 5 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 6 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

Thus, contrary to the control electronics and processing facility which typically is provided by a constant regulated supply voltage, the supply voltage for the driver 201 is typically a varying voltage, and specifically is typically a rectified AC voltage with no further smoothing. As a consequence the generated drive signal is typically one with a relatively high frequency switching (typically at least 1kHz) of an envelope voltage that itself is a time varying voltage, nut with much lower frequency (typically less than 200Hz). The supply voltage may be generated as the input supply signal being reduced to a lower voltage (say to around 40V) by a power transformer and subsequently rectified using e.g. a rectifier bridge. The resulting supply signal may be a rectified sinewave signal and accordingly the drive signal may have a periodic envelope corresponding to a rectified sine wave. Thus, the drive signal is generated to have a (typically) periodic varying envelope/ amplitude, and typically with a sinewave envelope/ amplitude.

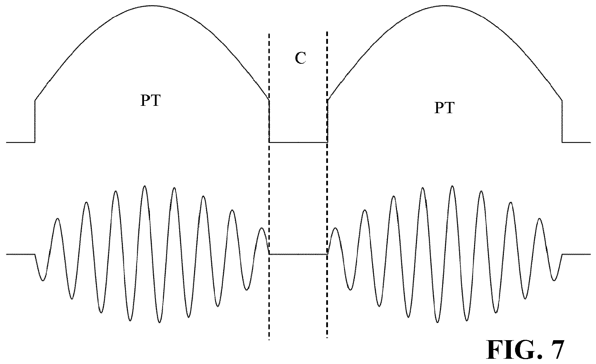

Accordingly, the generated drive signal, and thus the power transfer signal, may have two frequency properties, namely a fast switching frequency and a slower envelope/ amplitude frequency representing the periodic variations in the envelope/ amplitude of the drive signal/ power transfer signal. FIG. 7 illustrates an example of such a drive signal/ power transfer signal.

The amplitude variations of the power transfer signal results in a corresponding variation in the induced current! voltage in the receiver coil 107. Thus, the induced power signal may also have a corresponding time varying property and thus the transferred power may exhibit a periodic time variation.

In the example of FIG. 7, the envelope of the drive signal/ power transfer signal follows a rectified sine wave except for around the zero crossings/ minima where the drive signal/ power transfer signal is set to have a zero amplitude. Thus, in the example, a repeating time frame may be imposed similarly to the example of FIG. 4 with the drive signal/ power transfer signal being active during power transfer time intervals PT and with the signal being off during short communication time intervals C. In the approach, the power transmitter is arranged to transmit a message to the power receiver which provides information of the envelope variations. Specifically, the power transmitter controller 203 is arranged to control the first communicator 205 to transmit a message to the power receiver comprising a frequency indication that is indicative of a frequency of an envelope of the power transfer signal during the power transfer phase.

The power receiver is arranged to receive the message and specifically the second communicator 307 is arranged to receive the message and provide the frequency indication to the power receiver controller 301. The power receiver controller 301 may then proceed to adapt the operation dependent on the envelope frequency indicated by the frequency indication and thus based on the frequency of the envelope variations of the induced signal.

Thus, the power receiver controller 301 is arranged to adapt a power transfer operation in response to the frequency indication. The power transfer operation may be one that is directly part of the power transfer path or may for example be an operation of the load being powered by the power transfer.

The inventors have realized that improved operation and power transfer may be achieved by allowing the power transfer operation to adapt to the specific frequency of the envelope variations. Indeed, the Inventors have realized that rather than the envelope variations merely being of minor importance and having only a small impact on the power receiver operation and with negligible effect on the powered load, it may in some scenarios and for some devices have a significant impact. The Inventors have realized that in some scenarios, a change in the envelope frequency, such as resulting from the power transmitter being powered by a mains network having a different frequency (e.g. changing from 50Hz to 60Hz mains power), may result in degraded performance of the powered device/load, or even in a non-functioning powered device. The Inventors have further realized that this may be mitigated or overcome by providing means for the power receiver to perform an adapted operation that can adapt to the envelope variations, and specifically to the specific envelope frequency.

For example, some devices have very specific frequency input requirements to drive motors, or mechanisms in between, and they may need a specific supply frequency to operate. In many conventional approaches, the power receiver provides a power to the load which is derived directly from the induced signal with minimal smoothing, and indeed in many higher power implementations, an AC signal (or possibly a rectified AC signal) is provided directly to the load such that the load is subjected to the full envelope power variations. Thus, in many efficient implementations, the load will experience a time varying supply signal that often directly follows the envelope variations, such an approach may be highly efficient, have low complexity (and component count), low component power dissipation, etc.

However, as realized by the Inventors, such an approach may also result in undesired operation and performance as some loads are highly susceptible to the frequency of the supply voltages. For example, the calculation and measurement of average (or RMS) voltage and / or power in the receiver relies on the knowledge of the envelope frequency. Synchronizing the measurement to the AC frequency is fundamental to providing correct measurements to request the correct amount of power from the transmitter.

In the described approach, the power transmitter is arranged to actively inform the power receiver of the specific envelope frequency of the power transfer signal, and thus of the frequency of the variations of the supply signal that will be provided to the load, and the power receiver is arranged to adapt the power transfer operation depending on this envelope frequency, such as specifically only proceeding with the power transfer operation if indeed the envelope frequency matches one that can be supported by the power receiver/ load.

The specific power transfer operation that is adapted, and the specific adaptation that is performed, will depend on the specific preferences and requirements in the individual embodiment, and will specifically depend on the properties of the powered device and the intended operation thereof. As an example, in some embodiments the power transfer may only be performed if the envelope frequency has an appropriate value. For example, a given device may be arranged to only work with a 50Hz frequency, and accordingly power transfer may only be performed if indeed the power transmitter is powered by a 50Hz mains resulting in 50Hz envelope variations. Other advantageous examples of adaptations of the power transfer operation will be described later.

In many embodiments, the transmission of the frequency indication message will be prior to the power transmitter (and power receiver) entering the power transfer phase. In many embodiments, the power transmitter is arranged to transmit the frequency indication message during a power transfer initiation phase prior to the power transfer phase. The power transfer phase may be preceded by an initialization where the parameters for the power transfer operation are established and the power transfer operation is set up/ initialized.

For example, the power transmitter may be arranged to transmit the frequency indication message during the negotiation phase/ configuration phases that have been previously described.

During the initialization and setting up of the power transfer operation, the power receiver is accordingly provided with information on the envelope frequency, and it may proceed to adapt the power transfer operation in response to this.

In many embodiments, the power receiver may be arranged to set an operating parameter for the power transfer operation in dependence on the envelope frequency.

For example, in some embodiments where the load comprises a motor being driven by the induced envelope signal, the motor may be arranged to operate in one mode for an envelope frequency of 50 Hz (or 100Hz for a rectified envelope signal) and in another mode for an envelope frequency of 60Hz (or 120Hz for a rectified envelope signal).

As an example, a rectified envelope signal may be fed to the motor via a commutation circuit that is arranged to perform commutation for the motor. It is desirable to perform the switching of the commutation to coincide with the minima of the rectified envelope supply signal (or at zero crossing for a non-rectified envelope supply signal). Thus, the commutator circuit may be arranged to operate in a 50Hz mode or a 60Hz mode using e.g. a loop that locks to the envelope signal but with a small bandwidth around either 50Hz (100Hz) or 60Hz (120Hz) depending on the mode.

In such cases, the power receiver controller 301 may be arranged to select the mode of operation depending on the received frequency indication. If it indicates a 50Hz envelope frequency, the loop used for the timing of the commutation switching is initialized to 50Hz and with a small bandwidth around this (say ±1Hz), and if the frequency indication indicates a 60Hz envelope frequency, the loop used for the timing of the commutation switching is initialized to 60Hz and with a small bandwidth around this (again say ±1Hz).

In some embodiments, the load may only operate acceptably for one specific envelope frequency. For example, the load may be a motor driven with a fixed commutation frequency. In such cases, the power receiver controller 301 may be arranged to only proceed with the power transfer if the indicated envelope frequency matches the required frequency for the load. If there is no match, the power receiver controller 301 instead proceeds to terminate the power transfer initialization so that the power transfer phase is never entered.

The message may be a capability message which includes data reflecting the capability of the power transmitter to the power receiver, such as the version of a Technical Specification with which the power receiver is compatible, the maximum power level that can be provided, the communication capability of the power transmitter etc. Such information may be used by the power receiver to adapt operation such that it is compatible with the specific power transmitter. For example, for Ki power transfer systems, such a message, known as a capability message, is transmitted during the configuration phase.

The frequency indication may be transmitted as a field in the message, and specifically as a field in such a capability messages. Thus, a number of bits may be reserved for the frequency indication in a message being transmitted from the power transmitter to the power receiver. In some embodiments, the message may only contain the frequency indication (plus overhead data) but in many embodiments, the frequency indication may be included in a message with other data, such as together with other data describing properties/ capabilities of the power transmitter.

In many embodiments, the frequency indication may advantageously be a one bit indication. In many embodiments, a single bit frequency indication may be provided indicating whether the envelope frequency is 50Hz or 60Hz (100Hz or 120 Hz for the rectified signal), typically corresponding to whether the power transmitter is powered by a 50Hz or 60Hz mains/ power net/ power infrastructure.

In many applications and scenarios, the approach may thus be restricted to merely indicate whether the envelope frequency is one of two possible options, and specifically whether it is a 50/100Hz or 60/120Hz periodic envelope variation. This may provide a highly efficient operation with virtually no additional communication overhead as the required data can be limited to a single bit. Thus, the approach may be adapted to minimize the impact on the existing communication (and with a small communication overhead) by exploiting the realization that a simple binary frequency indication may be sufficient to cover substantially all practical applications in many systems.

As previously mentioned, the power receiver may in different embodiments be arranged to adapt the power transfer operation in response to the frequency indication in different ways. As mentioned, the power receiver controller 301 may in many embodiments be arranged to terminate an ongoing power transfer operation, or more typically when the proximity indication is received as part of a power transfer initialization, it may proceed to terminate the initialization and prevent the power receiver (and power transmitter) from entering the power transfer phase. In such a case, the power receiver may for example be arranged to transmit a message to the power transmitter indicating that the initialization should be terminated.

In many embodiments, the power receiver may be arranged to proceed to the power transfer phase but may be arranged to adapt an operating parameter for the power transfer operation. The power receiver may be arranged to directly adapt a part to the power transfer operation generating the signal to the load or may be arranged to adapt an operation of the load such that it is suited for the specific envelope frequency. For example, the power receiver may adapt the operation of a motor to operate in a 50/100Hz mode or in a 60/120Hz mode.

In many embodiments, the power receiver may comprise a synchronizer which is arranged to adapt a timing property of a power transfer operation in response to the frequency indication. The timing property may typically be a repetition frequency of an operation, or a repeating time interval used for a specific operation.

For example, as previously described, the synchronizer 315 may be arranged to synchronize the timing of commutation switching to the zero crossings/ envelope minima. The synchronizer 315 may control the switching by operating a phase locked loop that synchronizes to the minima and which control switching to coincide therewith. Depending on the frequency indication, the phase locked loop may be set to a frequency around 50/100Hz or 60/120Hz.

In many embodiments, the timing parameter may be an initial timing parameter for the operation during the power transfer phase. For example, a timing loop may be initiated with a frequency of 50/100Hz or 60/120Hz and the loop may then be arranged to adapt to the specific envelope frequency (e.g. within ±1Hz) during the power transfer loop to accommodate for small variations in the frequency of the local power net supply.

In some embodiments, the synchronizer 315 may be arranged to adapt a timing property for a communication operation and specifically a timing property of a transmission of a message to the power transmitter and/or of receiving a message from the power transmitter.

As previously described, the communication between the power transmitter and power receiver (in both directions) may advantageously in many embodiments be performed during communication time intervals, and these time intervals may advantageously be located around times of minima of the power transfer signal envelope thereby reducing interference of the power transfer signal on the communication as well as reducing the impact on the power transfer efficiency (as less instantaneous power is transferred for low levels of the envelope).

The transmissions of messages (in both directions) may be arranged to be performed during the communication time intervals and the second communicator 307 is arranged to transmit messages during the communication time interval. For example, it may start the transmission of a new message at the time instant (or shortly after) at which a new communication time interval starts (for a communication time interval allocated for transmission from the power receiver to the power transmitter). Similarly, the second communicator may be arranged to start detecting and receiving a message at the beginning of a communication time intervals (allocated for transmission from the power transmitter to the power receiver). The synchronizer 315 may be arranged to provide information to the second communicator 307 of the start times of the communication time intervals. For example, similarly to the approach described for the synchronization of the commutation switching, the synchronizer 315 may operate a timing loop (specifically a timing phase locked loop) that synchronizes to the zero crossings/ minima of the envelope of the power transfer signal/ induced signal. Similarly, the timing loop may be set to operate at 50Hz or 60Hz depending on the envelope frequency indicated by the frequency indication.

The synchronizer 315 may be arranged to determine a timing for transmitting messages to the power transmitter in dependence on the frequency indication, such as for example as described above. As a more simple example, the synchronizer 315 may detect a minimum of the envelope of the induced signal and proceed to generate a message transmit time with fixed time intervals from the time of this minima, with the time interval having a duration equal to a period (or half a period) of the envelope frequency as indicated by the frequency indication.

In some embodiments, the synchronizer 315 may be arranged to adapt at least one of a start, a duration, and a repetition interval of a measurement operation in response to the frequency indication.

For example, in many scenarios, it may be desirable to measure e.g. the minimum level of the envelope signal, and the described approach may be used to time these measurements by adapting the time between measurements to match the time period of the envelope signal as indicated by the frequency indication.

In some cases, the measurement may for example be used to determine the time instant of the minimum of the envelope signal. The beginning of a new measurement to detect the next time instant of a minimum may be set to be after a delay of 95% of the envelope signal time period as indicated by the frequency indication. The end of the measurement may be set to be after a delay of 105% of the envelope signal time period as indicated by the frequency indication. Thus, in the approach, the measurement used to detect the time instant of the next minimum may be controlled by the synchronizer 315 to cover 10% of the time period and to be centered around the expected time instant for the next minimum.

In some embodiments, the synchronizer 315 may be arranged to adapt a time interval over which the measurement is performed. For example, a measurement of an average level of the envelope of the induced signal may be determined by measuring the signal level at different time instants over a full period of the envelope signal. The synchronizer 315 may accordingly set the time period for the measurement. For example, if the frequency indication indicates a 50 Hz envelope frequency, the measurement period may be set to a multiple of 20 msecs and if it indicates a 60 Hz, the measurement period may be set to a multiple of 16.7 msecs.

In many embodiments, the power receiver comprises a user interface 317. The user interface 317 may provide indications to the user via e.g. a display, lights, audio etc. and may receive user inputs from buttons, keyboards, voice commands, gesture commands etc. In many embodiments, the user interface 317 may include low complexity user indications such as operator or warning lights and dedicated buttons or switches for initializing specific functions.

In some embodiments, the power receiver is arranged to generate a user indication depending on the frequency indication. Indeed, in some embodiments, the power receiver may directly present the envelope frequency indicated by the frequency indication to the user. For example, a small display may simply indicate 50Hz or 60Hz.

In other cases, the power receiver may for example provide a user alert/ warning indicating to the user if the power transfer is not performed due to the envelope frequency not matching that required by the power receiver/ load.

In some cases, the power receiver may be arranged to operate at different/ both envelope frequencies but may operate better for one frequency than for another. In such cases, the power receiver may be arranged to indicate the performance that is currently being provided, such as for example indicating that reduced operation/ performance is provided.

In some cases the power receiver may be arranged to inform the user if it will not be able to function at the specified frequency. This information may be provided before the power transfer phase is entered and indeed may result in the power transfer not being entered unless the user provides a manual input to override the warning and proceed to the power transfer phase. The power receiver may in this case proceed to the power transfer phase but with the operation e.g. operating out-of-spec or with reduced performance.

As previously described, the power transmitter may comprise a power supply input 211 receiving an AC supply power and providing an AC or rectified AC (varying DC) supply to the driver 201 (and specifically to the output/ inverter of the driver 201). In these cases, the frequency indication may indicate the frequency of the AC supply power.

In some cases, the power transmitter may be preconfigured to provide a frequency indication that e.g. may be stored or predetermined (e.g. during design/ manufacture). For example, the power transmitter may comprise a (semi-)permanent memory in which data reflecting the envelope frequency may be stored. For example, during installation of a permanent power transmitter, the installer may set a configuration parameter indicating the power supply frequency (e.g. to reflect whether the power transmitter is connected to a 50 Hz or 60 Hz power net). The parameter may be stored in (semi-permanent memory and during initialization of a power transfer, the power transmitter may extract the stored value for the envelope frequency and proceed to transmit the corresponding frequency indication.

In some embodiments, the power transmitter may be arranged to dynamically determine the supply frequency and to dynamically determine the corresponding frequency indication for transmission to the power receiver.

For example, when being powered up, the power transmitter may be arranged to detect zero crossings of the AC supply power, and to measure the time between zero crossings. It may then proceed to determine the corresponding supply frequency (or directly use the measured time between zero crossings as an indication of the time period and thus frequency of the power supply frequency). It may then proceed to select the frequency indication (e.g. the appropriate bit value indicating a 50 Hz or 60 Hz supply) and transmit this to power receiver e.g. during initialization of a power transfer.

The previous examples have focused on examples where the frequency indication is indicative of one of two frequencies, and specifically of whether the supply/ envelope frequency is a 50Hz/100Hz frequency or a 60Hz/ 120Hz frequency. This may be particularly advantageous in many embodiments as it may allow a single bit to be used to provide information that nevertheless will typically be sufficient for the majority of practical applications.

However, in other embodiments, the frequency indication may represent more possible frequencies and indeed may be arranged to represent a large number of different frequencies. Specifically, the frequency indication may be represented by more than one bit, such as for example by a data field of 4, 8 or 16 bits.

For example, in some embodiments, the power transmitter may be driven by a DC source (such as for example if the power transmitter is driven by a battery). In such cases, the power transmitter may comprise an internal supply unit for supplying the driver 201 with a varying supply voltage. For example, a switching/ commutation of the DC power supply may be performed following by a smoothing to generate a variation closer to a sine wave. Such an approach may for example provide a varying envelope that provides minima suitable for communications with reduced interference, may allow improved foreign object detection during such times, etc.

In such an embodiment, the supply frequency, and thus the envelope frequency, may be selected by the power transmitter and is not restricted by a frequency of a power net. Thus, a range of different frequencies can be selected, with e.g. different power transmitters or the same power transmitter in different modes selecting different frequencies. In this case, the frequency indication may indicate which specific frequency the power transmitter has selected in the specific application/ scenario.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

It will be appreciated that the reference to a preferred value does not imply any limitation beyond it being the value determined in the foreign object detection initialization mode, i.e. it is preferred by virtue of it being determined in the adaptation process. The references to a preferred value could be substituted for references to e.g. a first value.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. A power receiver (105) for wirelessly receiving power from a power transmitter (101) via an electromagnetic power transfer signal, the power receiver (105) comprising:
an input circuit comprising a receiver coil (107) arranged to extract power from the power transfer signal during a power transfer phase;
a communicator (307, 309) arranged to communicate with the power transmitter (101), the communicator (307, 309) being arranged to receive a message from the power transmitter (101), the message comprising a frequency indication being indicative of a frequency of an envelope of the power transfer signal;
a controller (307) arranged to adapt a power transfer operation in response to the frequency indication.

2. The power receiver of claim 1 wherein the communicator (307, 309) is arranged to receive the frequency indication during a power transfer initiation phase prior to the power transfer phase.

3. The power receiver of any previous claim wherein the controller (307) is arranged to terminate power transfer initiation in response to the frequency indication meeting a criterion.

4. The power receiver of any previous claim further comprising a user interface (317) and the controller (301) is arranged to control the user interface to generate a user alert.

5. The power receiver of any previous claim wherein the controller (307) is arranged to adapt a timing property of a power transfer operation in response to the frequency indication.

6. The power receiver of claim 5 wherein the controller (307) is arranged to set an initial timing property for the power transfer phase in response to the frequency indication.

7. The power receiver of claim 5 or 6 wherein the power transfer operation is a communication operation.

8. The power receiver of any previous claim wherein the controller (307) arranged to adapt at least one of a start, a duration, and a repetition interval for a measurement operation.

9. The power receiver of any previous claim wherein the frequency indication is a one bit indication.

10. A power transmitter (101) for wirelessly providing power to a power receiver (105) via an inductive power transfer signal, the power transmitter (101) comprising:
a power transfer coil (103) arranged to generate the power transfer signal;
a power transfer driver (201) arranged to generate a power transfer drive signal for the power transfer coil (103) to generate the power transfer signal during a power transfer phase;
a communicator (205, 207, 209) arranged to communicate with the power receiver (105);
a controller (203) arranged to control the communicator (205, 207, 209) to transmit a message to the power receiver (105) comprising a frequency indication being indicative of a frequency of an envelope of the power transfer signal during the power transfer phase.

11. The power transmitter of claim 10 further comprising a power supply input for receiving AC supply power and the frequency indication is indicative of a frequency of the AC supply power.

12. The power transmitter of claim 11 wherein the controller (203) is arranged to measure a frequency of the AC supply power and to determine the frequency indication in response to the measured frequency of the AC supply power.

13. A wireless power transfer system comprising the power receiver (105) of claim 1 and the power transmitter (101) of claim 10.

14. A method of operation for a power receiver (105) wirelessly receiving power from a power transmitter (101) via an electromagnetic power transfer signal, the method comprising:
an input circuit comprising a receiver coil (107) extracting power from the power transfer signal during a power transfer phase;
communicating with the power transmitter (101) to receive a message from the power transmitter (101) comprising a frequency indication being indicative of a frequency of an envelope the power transfer signal; and
adapting a power transfer operation in response to the frequency indication.

15. A method of operation for a power transmitter (101) wirelessly providing power to a power receiver (105) via an inductive power transfer signal, the method comprising:
generating a power transfer drive signal for a power transfer coil (103) to generate the power transfer signal during a power transfer phase;
communicating with the power receiver (105) to transmit a message to the power receiver (105), the message comprising a frequency indication being indicative of a frequency of an envelope of the power transfer signal during the power transfer phase.
